# EUROPEAN PATENT SPECIFICATION

(11) **EP 0 729 256 B1**
(45) Date of publication and mention of the grant of the patent: **28.04.2004**
(21) Application number: 96200441.2
(22) Date of filing: 21.02.1996
(51) Int. Cl.: H04M 1/27, H04Q 3/00, H04Q 3/62

(54) **Device for remote access to a virtual private network**
Fernzugangsvorrichtung zu einem virtuellen Privatnetz
Equipement d'accès à distance à un réseau privé virtuel

(30) Priority: 22.02.1995 NL 9500339
(43) Date of publication of application: 28.08.1996
(73) Proprietor: Koninklijke KPN N.V., 9726 AE Groningen (NL)
(72) Inventor: Spruijt, Cyrillus Patrick, c/o KPN Research, NL-2264 XZ Leidschendam (NL)
(74) Representative: Wuyts, Koenraad Maria

(56) References cited:
- EP-A- 0 425 203
- EP-A- 0 627 862
- WO-A-95/01689
- US-A- 4 791 665
- US-A- 4 802 199
- US-A- 5 339 356
- PATENT ABSTRACTS OF JAPAN vol. 012, no. 184 (E-614), 28 May 1988 & JP-A-62 287796 (TOSHIBA CORP)

## Description

### BACKGROUND OF THE INVENTION

The invention relates to a telecommunications device, such as a telephone set or a facsimile device, which is equipped for remote participation in a virtual private network. In particular, the invention is related to a communications device comprising communicating means for the communication with a user, input means for the input of dialling information, output means for the output of dialling information to a communications network, and activating means comprising a hook switch detector for the activation of said device, said output means being arranged for the output, in response to said activating means, of an access code.

Communications devices of this type are known from the Prior Art. There the communicating means for a telephone set, for example, are formed by the handset with microphone and loudspeaker, and for a facsimile device by a scanning and/or printing device. A keyboard is generally provided as input means, while a DTMF transmitter (DTMF = "Dual Tone Multiple Frequency") is usually present as output means for the output of dialling information (dialling signals). With such a prior-art communications device, a communications connection can be established by outputting dialling information to a connected network.

In practice a virtual private network (VPN) is often used within a company, that is to say, a communications network which is shared by a limited group of users and in which abbreviated numbers can be dialled. Within a limited area, such as an office building, a local communications network is present with its own exchange, often called a private or company exchange. Within the local network abbreviated numbers can be dialled, for example telephone numbers with four instead of seven digits. The virtual private network may extend beyond the strictly local network, in the said example beyond the office building concerned, by adaptations of (a part of) the public network. As a result, the local private network can be virtually extended at the expense of complexity in the public exchanges.

According to the prior art, if a connection is to be established from a connection point outside the VPN to a connection point within the VPN, special measures must be taken. On dialling a connection an access code must first be entered, before the number of the set concerned in the private network can be dialled. Said access code contains several dialling digits to establish a connection with the exchange associated with the VPN ("VPN platform"). Furthermore, the access code can contain an identification code and/or authorisation code. It will be clear that repeated dialling of an access code is time-consuming, while at the same time the chance of errors (wrong dialling digits) cannot be excluded.

From the Prior Art, various arrangements for producing access codes of parallel, i.e. competing public networks are known. However, none of the Prior Art arrangements allows the access code of a virtual private network to be automatically produced upon activation of a telephone set.

British Patent Application GB-A-2,171,274 discloses telephone subscribers' apparatus for use where two separate telephone systems, such as British Telecom's and Mercury's, interwork. In order to reach the other network, i.e. the network a telephone set is not directly connected to, the set has a special key to produce the other network's access code after the first network's dial tone is received. This known apparatus does not produce an access code without human intervention, nor does it produce the access code of a virtual private network.

British Patent Application GB-A-2,218,595 also discloses telephone subscribers' apparatus for use where two separate but equivalent telephone systems interwork. Dialling digits are monitored and when a call for the other network is detected, said network's access code is inserted. Special dialling digits are thus required for reaching the other network. Said publication does not deal with virtual private networks.

German Patent Application DE-A-3,637,094 discloses a facsimile device for use with a private branch exchange. In order to obtain a connection with the public telephone network, special digits have to be entered. Said publication does not deal with reaching a private network from a public network.

British Patent Application GB-A-2,192,768 discloses a network access device to be interposed between a telephone set and a network access point, for use where two equivalent but separate networks exist, as in the United Kingdom. Upon depression of a keypad button, the access code of the other network is produced. Said publication does not deal with virtual private networks either.

International Patent Application WO95/01689 discloses a telephone set having various selection buttons in order to produce a prefix of an interexchange (long distance) carrier. Again, virtual private networks are not dealt with.

Japanese Patent Abstract Vol.012, no. 184 discloses a central facility shared amongst several telephone sets.

### SUMMARY OF THE INVENTION

The invention seeks to eliminate the above-mentioned and other disadvantages of the prior art, and to provide a communications device which enables a virtual private network to be formed in a simple and inexpensive manner.

The invention further seeks to provide a communications device which makes a virtual private network possible without adaptations in the public network, even if the respective users are situated at large mutual distances.

The invention furthermore seeks to provide a device which, in interaction with a conventional communications device, makes the formation of a virtual private network possible in a simple and inexpensive manner.

To this and other ends the invention proposes a device according to claim 1.

Other advantageous embodiments of the invention are claimed in dependent claims 2-4.

In other words, on the activation of the device (such as the lifting of the handset in the case of a telephone set) the device automatically outputs a series of dialling digits which matches the access code of the virtual private network concerned. At the same time the access code may include an access number plus an identification code and/or an authorisation code, the access number forming the actual telephone number of the VPN exchange (VPN platform), while the identification code and the authorisation code may be used to prevent the use of the VPN platform by unauthorised users.

It is noted that in this text the term "dialling digits" refers to dialling information in general, that is, characters for establishing a communications connection such as could be entered, for example, with the keyboard of a telephone set, including "*" and "#".

As the means for the output of dialling information are arranged for the interruption of the output of said access code in response to an interruption signal, the process of accessing a virtual private network may be interrupted when a connection to a line not included in the VPN is sought. In this way, it is avoided to have to dial an "external" line via the VPN. It is, however, possible in the device of the invention to omit the interruption facility.

The interruption signal is preferably generated by, or in response to, the input means, which normally will comprise a keyboard. The said activating means may comprise a hook switch which reacts upon the lifting of the handset of the telephone set, but may also comprise a key, for example the transmit key on a facsimile device.

The means for outputting dialling information, which may include a DTMF transmitter (see Reference 7), are advantageously set up for the interruption of the output of the access code in response to an interruption signal. Preferably, the device will apply for an ordinary connection after the interruption signal without automatically outputting dialling information. As a result, it is possible that numbers outside the VPN can also be chosen, namely by generating an interruption signal and subsequently dialling the number (not associated with the VPN).

The device according to the invention thus automatically establishes a connection with the second network (the VPN). A connection with a another subscriber line of the first network (the network whose subscriber line is used by the device) can only be selected after interruption of the VPN connection.

Preferably the input means are set up for the generation of the interruption signal and may include a special key for this purpose. The activation signal may also be generated by one of the customary keys of the input means,such as the keys "0", "#" or "*". The access code is advantageously adjustable, so that said device can be usable for a number of private networks. If desired, said device can be provided with an option for the automatic dialling of one of several private networks.

The device according to the invention can advantageously be provided with means for the temporary storage of dialling information which was entered during the output of the access code. With such buffer means it is possible to enter dialling digits during the automatic output of the access number, which is time-saving for the user and in general enables a connection to be established sooner.

The invention further provides a device for the output of dialling information, for use in combination with a communications device, comprising means for the detection of an activation signal from the communications device and means for the output, in response to the activation signal, of an access code of a private network. With such a device it is possible to use an existing telephone set or facsimile device for forming a private network in accordance with the invention.

### REFERENCES

[1] GB-A-2,171,274
[2] GB-A-2,218,595
[3] DE-A-3,637,094
[4] EP-A-0,276,992
[5] GB-A-2,192,768
[6] WO95/01689
[7] F. Mazda (ed.): "Telecommunication Engineer's Reference Book", Oxford 1993.

### EXAMPLARY EMBODIMENTS

The invention will be explained in greater detail below by reference to the figures.

FIG. 1 diagrammatically shows a first embodiment of a device according to the invention.

FIG. 2 diagrammatically shows a second embodiment of a device according to the invention.

FIG. 3 diagrammatically shows a virtual private network according to the invention.

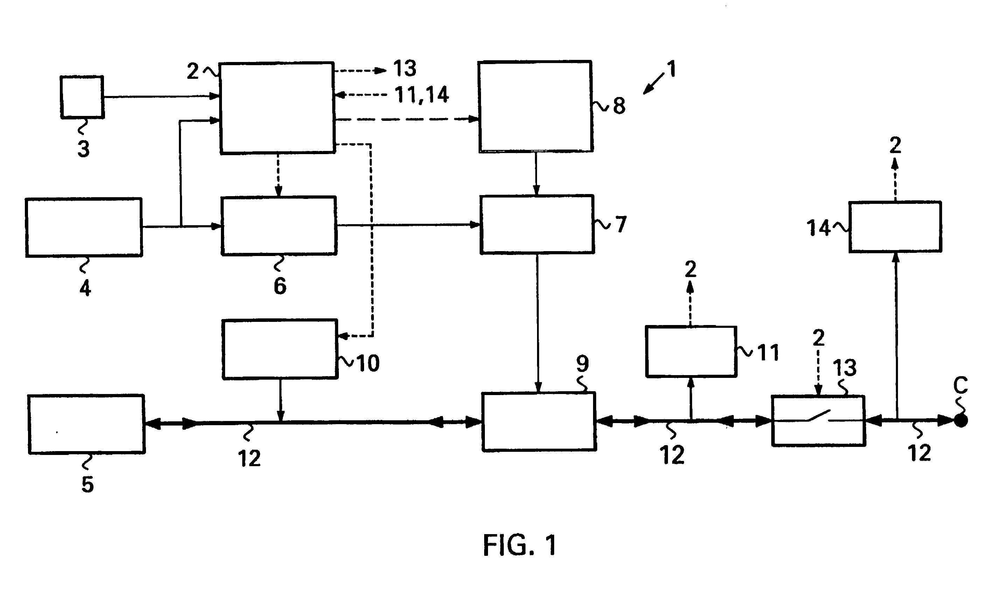

The device 1 diagrammatically shown in FIG. 1, which device may, for example, be a telephone set, comprises a control unit 2, a hook switch detector 3, a keyboard 4, a handset 5, a buffer 6, a DTMF generator 7, a number store 8, a suppressor 9, a dial tone generator 10, a signal detector 11, a connecting line 12, a switch 13 and a ringing generator 14. In FIG. 1, signal connections are represented by continuous lines and control connections by non-continuous lines.

Said handset 5, which is provided with a microphone and a loudspeaker (not shown), forms the communications means for the communication with a user. Said handset 5 is connected to said terminal C by means of said connecting line 12, which for communication purposes (for example speech) is used in two directions, via said suppressor 9 and said switch 13. A connection to said communications network (not shown) is established via said terminal C by means of an external transmission line (not shown). Said suppressor 9 suppresses DTMF tones in the direction of said handset 5 and the dial tone in the direction of the external communications network. At rest, switch 13 is open.

Said hook switch detector 3, which may include a switch which reacts to the presence of said handset 5, forms the activating means for the activation of said device 1. The lifting of said handset (or pressing said activation key) causes an activation signal which is supplied to said control unit 2.

Said keyboard 4, which may be replaced by a dial, forms the input means for the input of dialling information. The dialling information entered (dialling digits) is supplied to said buffer 6 as well as said control unit 2.

Said DTMF generator 7 forms the output means for the output of dialling information to said communications network. The dialling digits are supplied to said communications network in the form of dialling signals (DTMF) via said suppressor 9, said switch 13 and said terminal C.

As soon as said control unit 2 receives an activation signal from said hook switch detector 3, said control unit 2 outputs a control signal to said switch 13, after which said switch 13 closes (said closing is detected by said communications network and is processed as a request for a communications connection). Said control unit 2 also outputs a control signal to said number store 8. In said number store 8 at least one access code, that is to say, an access number possibly together with an identification code, of a VPN exchange is stored. Said access code is supplied to said DTMF generator 7, which converts said (dialling) digits of said code into DTMF tones. Said dialling signals generated in this manner are supplied via said suppressor 9, said connecting line 12 and said switch 13 to the communications network connected to the terminal C. Hereupon the communications network will establish a connection to said VPN. During the output of the access code, a dial tone is put on said line 12 by said dialling tone generator 10 and made audible in said handset 5 so that the user knows that said device is active and that he can enter (further) dialling information.

Since in practice it may take some time before said communications network, in particular the exchange concerned to which said device is connected by an external transmission line, is ready to receive dialling information, said number store 8 is preferably not actuated immediately after receiving an activation signal, but after either a pre-determined period T1 (for example two seconds) has expired or said signal detector 11 outputs a detection signal. Said detection signal, which is supplied to said control unit 2 from said signal detector 11, indicates the detection of the dial tone which is generated by the exchange concerned.

After the output of (at least a portion of) said VPN's access code, it may in practice take some time before further dialling information can be outputted to said VPN. This required time may be influenced by possible authorisation routines. In many cases it may therefore deserve recommendation, after said access code has been outputted, not to output further dialling information stored in said buffer 6, but to wait until a certain signal (alarm) is received from said VPN, in which case said signal can be detected by signal detector 11. Alternatively, the expiration of a pre-determined period T2 can be awaited, where T2 can, for example, amount to two seconds but is preferably adjustable, possibly from said VPN. In some VPNs a third dial tone occurs, for example during or after the identification process. In that case it may be advisable to wait for a pre-determined period T3, or to detect the occurrence of the further dial tone. If in all cases use is made only of the expiration of a pre-determined period, said signal detector 11 can be omitted.

During the outputting of said access code, said control unit 2 ascertains which keys of said keyboard ("keypad") 4 are operated. As soon as the first dialling information (first key stroke) is detected by said control unit 2, said dial tone generator 10 is deactivated so that the user knows that the dialling information entered is being processed. As long as said device is occupied with the output of the access number, the dialling information selected by the user (entered or possibly read out from an activated store) is stored in said buffer 6. If, subsequent to the output of the access number, all stored dialling information has been processed, any following dialling information which is entered with the aid of said keyboard 4 can be supplied to said DTMF generator 7 directly. To this end, buffer 6 can be set up for the direct transfer, under the influence of said control unit 2, of said dialling information if buffer 6 is empty.

A pre-determined key on the standard keyboard, for example the "0" or the "*", or a separate key implemented on the keyboard for this purpose, forms the interruption key ("escape") by means of which the user indicates that he wishes to call a number outside the VPN. If said interruption key is operated and an interruption code (interruption signal) is consequently generated, the output of the access code, which meanwhile may have started, must be aborted. Further, if said control unit 2 has recognised the (interruption) code which was outputted by the interruption key, said buffer 6 is cleared and said switch 13 is opened to abort the partially built-up connection with the VPN. Further, said dial tone generator 10 is activated to indicate to the user that dialling information can be entered. Preferably the interruption code is stored in said control unit 2, said control unit 2 being provided with comparison means (logical gates, for example) for the purpose of comparing the stored and the received codes.

Dialling digits which were entered after the interruption code are stored in buffer 6. As soon as the first dialling information (first key stroke) is detected by control unit 2, said dial tone generator 10 is deactivated so that the user knows that the dialling information which was entered is being processed. After a pre-determined period T4, for example also two seconds, said switch 13 is closed for the purpose of again building up a connection. After again a pre-determined time T1, or after said signal detector has outputted a signal for this purpose, said dial tone generator 10 is switched off as yet if necessary, or any codes (dialling digits) stored in buffer 6 are supplied to said DTMF generator 7, which converts these codes to DTMF signals which in turn are supplied to the communications system via said terminal C. When all stored codes have been processed, possible subsequent codes (dialling digits) entered by means of the keyboard 4 may be supplied directly to the DTMF-generator. To this end buffer 6 can be set up for the direct transfer of these codes, under control of said control unit 2, if said buffer 6 is empty. After all entered codes have been processed, said device 1 (for example a telephone set or facsimile device) can be used in the known manner.

Incoming calls activate said ringing generator 14, which may comprise a bell, buzzer and/or indication light. If the user lifts said handset 5 (or operates the activating means in another manner), said switch 13 is closed under control of said control unit 2. Said ringing generator 14 can, in the case of an incoming call, advantageously output a signal to said control unit 2, so that said control unit can switch over to a suitable control routine (processing of incoming call). In such a control process conflicting situations are prevented, such as the activation of said dial tone generator 10 in the case of an incoming call.

In addition to the components named in FIG. 1, said number store 8 can contain frequently used dialling information, the stored dialling information being retrievable via said keyboard 4 and said control unit 2.

Said communications device 1 of FIG. 1 can be composed of common, commercially available components. Said control unit 2 may be formed by a microprocessor with an associated store. Said number store 8 can be formed by a suitable semiconductor memory, for example a RAM memory. Said buffer 6 may include a shift register. In the case of a facsimile device, for example, a reading and/or printing unit may be provided. Preferably all the components shown in FIG. 1, with the possible exception of said handset 5, are accommodated in a suitable casing (not shown). In addition the casing may also accommodate a suitable electrical power supply for the electronic circuits, for example in the form of a battery.

Although in FIG. 1 a telephone device is shown as an example of a communications device, it will be understood that the inventive idea can also be applied to other communications devices, such as facsimile devices and videotelephones, or combinations of telephone and fax devices for example.

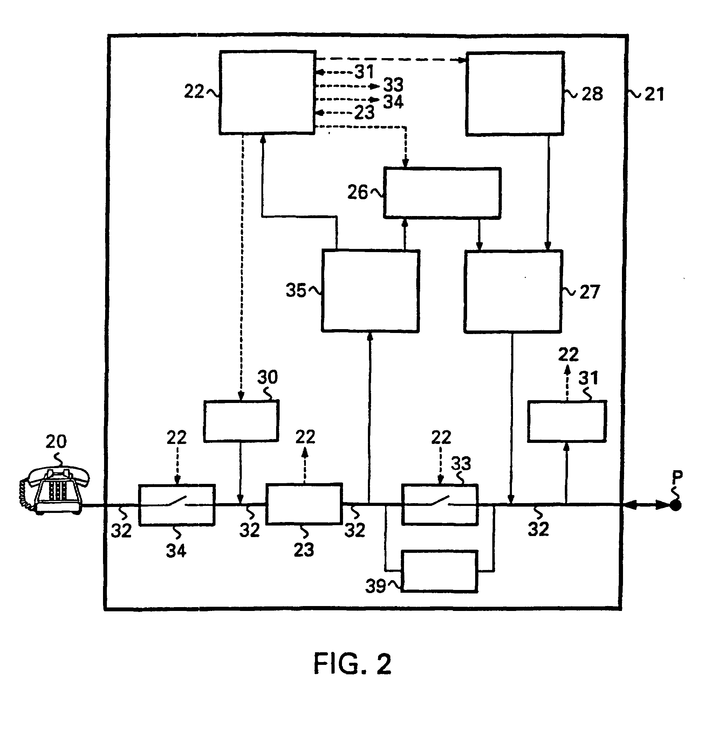

The communications device diagrammatically shown in FIG. 2 is substantially composed of two parts. A conventional communications device 20 (a telephone set, for example) is connected to a communications network (telephone network) via a connection device 21. In this context, said connection device 21 is preferably implemented as a separate (series-connected) box.

The structure of said connection device 21 shows similarity with that of said device 1 of FIG. 1. Said device 21, in combination with said device 20 which is connected to it, is functionally equivalent to said device 1 of FIG. 1. Said device 21 comprises a control unit 22, which is connected via control lines (indicated in FIG. 2 by non-continuous lines) to inter alia a hook switch detector 23, a buffer 26, a number store 28, a dial tone generator 30, a signal detector 31, a first switch 33 and a second switch 34. A connecting line 32 connects said communications device 20 to said terminal P for the connection of an external transmission line and the establishment of a connection to an exchange. Said switches 33 and 34 and said hook switch detector (activating means) 23 are included in said connecting line 32. Said device 21 further comprises a DTMF transmitter 27 and a DTMF receiving device 35, which are coupled via said buffer 26. A low-pass filter 39 (optionally present) is mounted in parallel to said switch 33.

The operation of said device 21 is as follows. In state of rest, said switch 33 is open and said switch 34 is closed. Said buffer 26, which is preferably implemented as a FIFO buffer (First In First Out) and, for example, may include a shift register, is empty in state of rest. The VPN's access code is loaded in said number store 28.

If a user lifts the handset of said telephone set 20, a direct current will start flowing through said line 32 (at least in conventional telephone installations). In this context, said filter 39 is designed in such a manner that direct current is and alternating current (dialling pulses, speech, dial tone) is not allowed to pass. Said direct current is detected by said hook switch detector 23, which conventionally consists of a resistor and voltage detecting means connected in parallel thereto, whereupon a detection signal is outputted to said control unit 22. Under control of said control unit 22, said dial tone generator 30 will hereupon generate a dial tone. Dial pulses which are outputted consecutively by said device 20 are received by said DTMF receiving device 35 and converted into digital codes, after which said codes are stored in said buffer 26. As soon as the first code (first key stroke) is detected by said control unit 22, said dial tone generator 30 is deactivated, so that the user knows that the dialling information which was entered is being processed. Said codes are also supplied to said control unit 22, which compares these with a pre-determined, preferably permanently stored, interruption code. Said interruption code is for example the code which corresponds to the dialling digit "0".

Said access code can therefore be outputted immediately on the activation of said device, as long as no interruption code occurs. To this end, under control of said control unit 22, said number store 28 outputs the associated dialling digits of said access code to said DTMF transmitter 27, which converts said dialling digits into DTMF pulses. Said DTMF pulses are supplied to the connecting network (not shown) via said line 32 and said terminal **P**.

All dialling digits which are received during the output of said access code are stored in said buffer 26 via said DTMF receiving device. After said access code has been outputted, for example after a certain period T4 or after a certain signalling of the VPN has been detected by said signal detector 31, said stored dialling digits can be read out from said buffer 26 and also supplied to said DTMF transmitter 27. In this manner the stored dialling digits, like said access code, are supplied to the communications network.

The interruption of the connection is again detected by said hook switch detector 23, after which said device 21 returns to the state of rest.

If a dialling digit is equal to said interruption code (the user dials a number outside the VPN), the output of the access code must be stopped and any connection which may possibly have been established must be interrupted by the closing of said switch 33. Dialling digits which are entered by the user after the interruption code and which are therefore outputted by said device 20, must be passed on to the connecting network (via said terminal P). To this end, said switch 33 must be closed again and said dial tone generator 30 must be deactivated.

Dialling digits which are entered directly after the interruption code may be lost because said switch 33 is not closed (again) in time and/or a new connection (dial tone) has not been established in time. To this end, the dialling digits can be temporarily stored in said buffer 26. In this case said switch 33 can be closed and the dial tone generator can remain activated until a connection is established. The latter can be detected with said signal detector 31. The dialling digits can subsequently be outputted by said DTMF transmitter 27 via said DTMF receiving device 35 and said buffer 36.

The interruption of the connection after the termination of a call, for example because of the user putting down the handset of said set 20, is determined by said hook switch detector 23, which thereupon outputs a detection signal to said control unit 22. In response to said detection signal, said device 21 returns to the state of rest.

In a possible embodiment it is first checked, before an access code is outputted, whether an interruption code has been entered. In this case said access code can only be outputted if said interruption code has not occurred at the beginning of the dialled number (check on first dialling digit), but also only if in all dialling digits which were entered no interruption code occurs (check on all dialling digits, that is to say, a pre-determined number or the number which were entered within a pre-determined period). The first case leads to a connection which is established more quickly. The second case is advantageous if the user changes his mind while entering the dialling digits and as yet decides to dial a number outside the VPN.

As has been described with reference to FIG. 2, it is possible to implement said device 21 in such a manner that the dialling information, viz. the access code, is in fact transmitted to the network in first instance, that is to say, without a check on the interruption code, and that the connection partially built up in this manner is interrupted (for example by the opening of said switch 33) if an interruption code is detected. This has the advantage that a connection to the VPN can be established more quickly. On the other hand, a (beginning of a) connection is sometimes built up unnecessarily in that case by the associated exchange of the network.

Of course said device 1 of FIG. 1 can also be implemented in such a manner that the check on said interruption code is only performed on the first dialling digit, or that the access code is outputted directly as desired (that is to say, immediately after the activation of the device), or only after the input of one or more dialling digits.

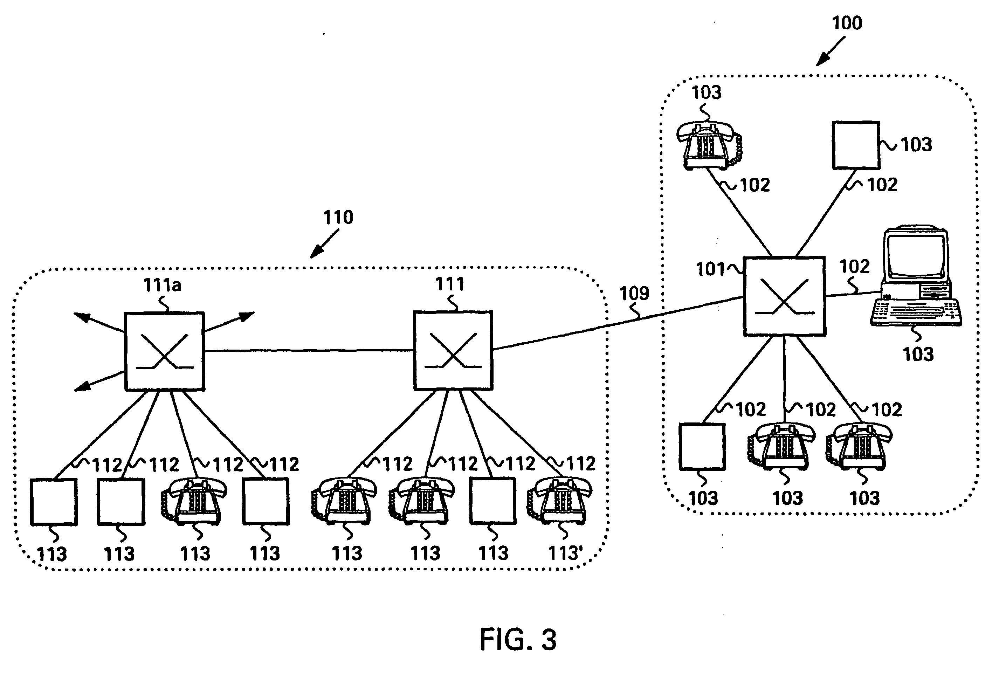

The virtual private network 100 diagrammatically shown in FIG. 3 comprises an exchange 101, internal subscriber lines 102 and thereto connected communication devices (such as telephone sets) 103. Via a line 109, said VPN 100 is connected to an external network 110 having external exchanges 111 and 111a, external subscriber lines 112 and thereto connected communication devices (such as telephone sets) 113. Apart from the exchange 101 shown, said virtual private network 100 may comprise several exchanges.

In the example shown, the communications device 113' is a device as shown in FIG. 1. With the aid of said device 113', a user can obtain access to the VPN in a simple manner due to the device automatically dialling the access number of the VPN. In that way, the user is given the impression that he forms part of the VPN. If the user wishes to reach a subscriber who does not form part of the VPN, he dials a pre-determined code, for example "0", whereupon he obtains a connection with said exchange 111 and not, as otherwise is the case, with said exchange 101.

Although a direct connection 109 is shown between said exchange 111 and said VPN exchange 101 in FIG. 3, it will be understood that in practice several exchanges or other intermediate stations not shown here can be included in said connection.

The so-called VPN platform (101 in FIG. 3) can be formed by the usual private exchange, but also by a public exchange which is set up for this purpose. From said VPN 100, communication devices, such as said device 113', can be reached in a simple manner by a number conversion in the private exchange, that is to say, an extension is added to the abbreviated number by the exchange in such a manner that the associated external number is created.

It will be understood by those skilled in the art that the invention is not limited to the exemplary embodiments shown, and that many changes and additions are possible without going beyond the scope of the invention. Thus the invention can find application not only in traditional telephone networks, but also in other telecommunications networks, such as ISDN networks.

## Claims

1. Device (21) for the output of dialing information adapted for use within a telephone set (1, 20, 113') and fit to be connected to an exchange (111, 111a) of a telecommunications network (110);
the device comprising means (23) for detecting an activating signal of said telecommunications device and means (2,7;22,30) for outputting, in response to said activating signal, an access code, **characterized in that**
- said access code comprises dialing digits to establish a connection with a private or public exchange (101) associated with a virtual private network platform (100, 101); and **in that** the device further comprises
- means (35,22) for checking on the occurrence of an interruption code generated by the user of the telephone set and for interrupting, in response to the detection of such an interruption code, the output of said access code for the purpose of establishing a connection outside the virtual private network.

2. Device according to claim 1, in which said access code comprises an access number and an identification code.

3. Device according to claim 1, provided with means (6,26) for temporary storage of dialing information which was entered during the output of said access code and for outputting said dialing information after the output of said access code.

4. Telephone set (1,113') comprising a device as claimed in claim 1.

## Patentansprüche

1. Vorrichtung (21) für die Ausgabe von Wählinformation, geeignet für den Einsatz in einem Telefongerät (1, 20, 113') und bereit, um mit einer Vermittlungsstelle (111, 111a) eines Telekommunikationsnetzwerkes (110) verbunden zu werden, wobei die Vorrichtung Mittel (23), um ein Aktivierungssignal der besagten Telekommunikationsvorrichtung zu erfassen, und Mittel (2, 7; 22, 30) umfasst, um in Antwort auf das besagte Aktivierungssignal einen Zugangscode auszugeben, **dadurch gekennzeichnet, dass** der besagte Zugangscode Wählzeichen umfasst, um eine Verbindung mit einer privaten oder öffentlichen Vermittlungsstelle (101) herzustellen, die einer virtuellen privaten Netzwerkplattform (100, 101) zugeordnet ist, und dass die Vorrichtung ferner Mittel (35, 22) umfasst, um auf das Auftreten eines durch den Benutzer des Telefongerätes erzeugten Unterbrechungscodes hin zu überprüfen und um in Antwort auf die Erfassung eines solchen Unterbrechungscodes die Ausgabe des besagten Zugangscodes zum Zwecke der Herstellung einer Verbindung ausserhalb des virtuellen privaten Netzwerkes zu unterbrechen.

2. Vorrichtung nach Anspruch 1, **dadurch gekennzeichnet, dass** der Zugangscode eine Zugangszahl und einen Identifikationscode umfasst.

3. Vorrichtung nach Anspruch 1, **dadurch gekennzeichnet, dass** Mittel (6, 26) zum temporären Speichern von Wählinformation, die während der Ausgabe des besagten Zugangscodes eingegeben worden ist, und zur Ausgabe der besagten Wählinformation nach der Ausgabe des besagten Zugangscodes vorgesehen sind.

4. Telefongerät (1, 113') mit einer Vorrichtung nach Anspruch 1.

## Revendications

1. Dispositif (21) servant à délivrer une information de numérotation adaptée pour être utilisée dans un appareil téléphonique (1,20,113) et monté de manière à être connecté à un central (111,111a) d'un réseau de télécommunication (110);
le dispositif comprenant des moyens (23) pour détecter un signal d'activation dudit dispositif de télécommunication et des moyens (2,7;22,30) pour délivrer, en réponse audit signal d'activation, un code d'accès,
**caractérisé en ce que**
- ledit code d'accès comprend des chiffres de numérotation pour établir une connexion avec un central privé ou public (101) associé à une plate-forme (100,101) de réseau privé virtuel; et **en ce que**
- le dispositif comporte en outre des moyens (35,22) pour vérifier, lors de l'apparition d'un code d'interruption généré par l'utilisateur de l'appareil téléphonique pour interrompre, en réponse à la détection d'un tel code d'interruption, le signal de sortie du code d'accès en vue d'établir une connexion à l'extérieur dudit réseau privé virtuel.

2. Dispositif selon la revendication 1, dans lequel ledit code d'accès comprend un numéro d'accès et un code d'identification.

3. Dispositif selon la revendication 1, pourvu de moyens (6,26) pour mémoriser temporairement une information de numérotation qui a été introduite pendant la sortie dudit code d'accès et pouvant délivrer ladite information de numérotation après la sortie dudit code d'accès.

4. Appareil téléphonique (1,113) comprenant un dispositif selon la revendication 1.
